(19) Europäisches Patentamt
European Patent Office
Office européen des brevets

(11) EP 2 360 992 A1

(12) EUROPEAN PATENT APPLICATION

(43) Date of publication:
24.08.2011 Bulletin 2011/34

(51) Int Cl.:
$H05B\ 33/08^{(2006.01)}$

(21) Application number: 11154206.4

(22) Date of filing: 11.02.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.02.2010 US 303344 P

(71) Applicant: Goeken Group Corporation
Naperville, Illinois 60563 (US)

(72) Inventor: Janik, Raymond
Naperville, IL 60563 (US)

(74) Representative: Lipscombe, Martin John et al
Nash Matthews
90-92 Regent Street
Cambridge CB2 1DP (GB)

(54) **Direct AC drive for LED lamps**

(57) A direct driver system is disclosed for powering and regulating LED lamps. An LED driver is configured to serve as a linear regulator/switcher, thus minimizing the need for the use of switched-mode power supplies, flybacks or pulse-width modulation (PWM) in LED driver circuitry. The direct drive is configured with a voltage source, a resistive element or apparatus, and a predetermined number of LEDs optimized to produce customizable features in relation to driver efficiency, power factor and regulation. When dimming circuits are used, an active region for the LED can be defined using a phase angle of the dimming circuit.

FIG. 8

**Description**

RELATED APPLICATIONS

This application claims priority to US Provisional Application No. 61/303,344, titled "Design Methodology for Direct AC Drive LED Lamps" by Raymond G. Janik, filed February 11, 2010, wherein the content is incorporated by reference in its entirety herein.

The present disclosure relates to systems and methods for driving a plurality of LED lamps under an optimal configuration, with or without the use of dimming circuits.

BACKGROUND INFORMATION

LED lamps (also referred to in the art as "LED light bulbs") are solid-state lamps that use light-emitting diodes (LEDs) as the source of light. An LED lamp may in general refer to conventional semiconductor light-emitting diodes, to organic LEDs (OLED), or polymer light-emitting diodes (PLED) devices. Since the light output of individual light-emitting diodes is small compared to incandescent and compact fluorescent lamps, multiple diodes are often used together. In recent years, as diode technology has improved, high power light-emitting diodes with higher lumen output are making it possible to replace incandescent or fluorescent lamps with LED lamps. LED lamps can be made interchangeable with other types of lamps as well.

Diodes use direct current (DC) electrical power, so LED lamps must also include internal circuits to operate from standard AC voltage. LEDs are damaged by being run at higher temperatures, so LED lamps typically include heat management elements such as heat sinks and cooling fins. LED lamps offer long service life and high energy efficiency, but initial costs were previously higher than those of fluorescent lamps. However, decreasing production costs have now minimized this drawback.

Unlike incandescent light bulbs, which illuminate regardless of the electrical polarity, LEDs will only light with correct electrical polarity. When the voltage across a p-n junction is in the correct direction, a significant current flows and the device is said to be forward-biased. If the voltage is of the wrong polarity, the device is said to be reverse biased, very little current flows, and no light is emitted. LEDs can be operated on an alternating current voltage, but they will only light with positive voltage, causing the LED to turn on and off at the frequency of the AC supply.

The voltage versus current characteristics of an LED are much like any diode. Since current is approximately an exponential function of voltage, a small voltage change results in a large change in current. It is therefore important that the power source gives the right voltage. If the voltage is below the threshold or on-voltage, no current will flow and the result is an unlit LED. If the voltage is too high the current will go above the maximum rating, heating and potentially destroying the LED. As the LED heats, its voltage drop decreases (band gap decrease), further increasing current.

LEDs are current-driven devices whose brightness is related to their forward current. Forward current can be controlled in several ways. The first method is to use the LED V-I curve to determine what voltage needs to be applied to the LED to generate the desired forward current. This is typically accomplished by applying a voltage source and using a ballast resistor. However, this method has drawbacks. Any change in LED forward voltage creates a disproportionately larger change in LED current. Also, depending upon the available input voltage, the voltage drop and power dissipation across the ballast resistor wastes power.

Another method of regulating LED current is to drive the LED with a constant-current source. A constant-current source eliminates changes in current due to variations in drive or source voltage, which translates into a constant LED brightness. For a constant-current source, the input power supply regulates the voltage across a current-sense resistor. The power-supply reference voltage and the value of the current-sense resistor then determine the LED current. Typically, multiple LEDs are connected in a series configuration to keep an identical current flowing in each LED. Driving LEDs in parallel requires a ballast resistor in each LED string, which leads to lower efficiency and uneven current matching.

Dimming circuits present additional challenges to LED lamps as LEDs have dramatically different voltage/intensity curves than filaments. Typically, dimmers are connected in series with the bulb and operate by conducting for a variable part of the mains cycle. However, when the dimmer's TRIAC or MOSFET is switching, it will adversely affect the regulation of a switched-mode power supply driver. Additionally, a TRIAC requires a "bleeder circuit" containing a resistor to maintain operation at low dimmer settings. To cut waste, a switch (e.g., transistor) and control circuit shut off the resistor when the LED is drawing sufficient power. Another dimming topology involves the use of a resonant asymmetric inductive supply (RAIS), positioned between the mains and the LED, and typically controlled by a TRIAC dimmer.

Accordingly, there is a need in the art to address these challenges and have an efficient methodology for configuring LED lamp drivers and LED lamp topologies. Additionally, there is a need to apply these methodologies to LED lamp circuits comprising dimmers.

## SUMMARY

The present disclosure illustrates exemplary systems, methods and apparatuses for providing power to LEDs. Under an exemplary embodiment, a driver circuit is equipped with a linear direct (DC) constant-current source to provide an average current output at a predetermined voltage. The driver circuit is then operatively coupled to an LED lamp having a predetermined number of LEDs connected in series. During the design/manufacturing process, the driver is configured to accommodate an LED voltage which in turn is dependent on the number ofLEDs used in the lamp during operation. The number of LEDs used in the system is determined by criteria based on specified operating conditions, including (1) a power factor and an efficiency of the driver circuit, (2) a power factor, efficiency and a regulation of the driver circuit, and (3) efficiency and a regulation of the driver circuit.

The power factor for the driver circuit may be determined from a ratio of total input power (PIN), over a product of a current ($I_{RMS}$) and a voltage ($V_{RMS}$) for the driver circuit. The efficiency of the driver circuit may be determined from a LED power ($P_D$) compared to a total input power ($P_{IN}$), while regulation in the power circuit may be determined from a differentiation in the average current ($d(I_{av})$) compared to a differentiation in an input voltage (dV) for the driver circuit. The number ofLEDs used in the system may also take into consideration a peak-to-average ratio of the driver circuit.

The driver circuit and system disclosed herein may operate with our without dimming circuits. When a dimmer is used, it is preferably placed between the constant-current source and the predetermined number of LEDs, where the dimmer is configured to operate in an active region defined by a combined voltage for the total number of LEDs used. Under one exemplary embodiment, the dimming circuit is a bidirectional triode thyristor or bilateral triode thyristor (TRIAC).

## BRIEF DESCRIPTION OF THE DRAWINGS

Embodiments of the present invention are illustrated by way of example and not limitation in the figures of the accompanying drawings, in which like references indicate similar elements and in which:

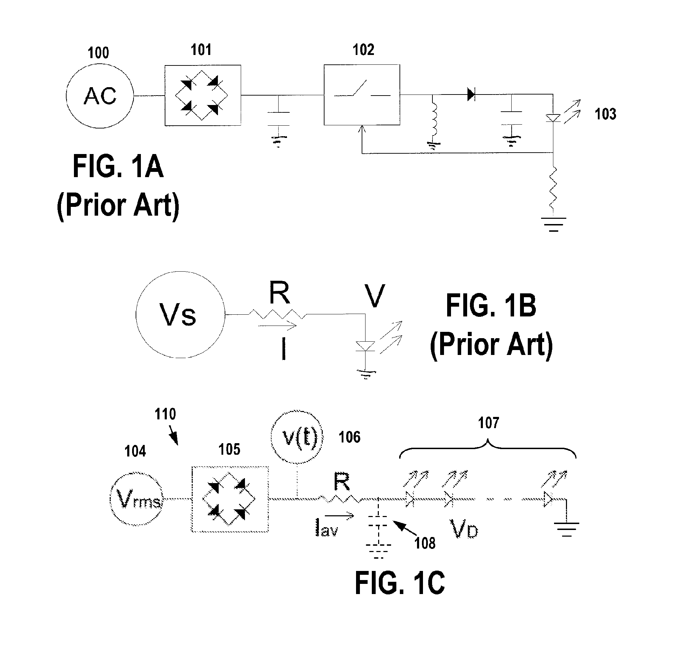

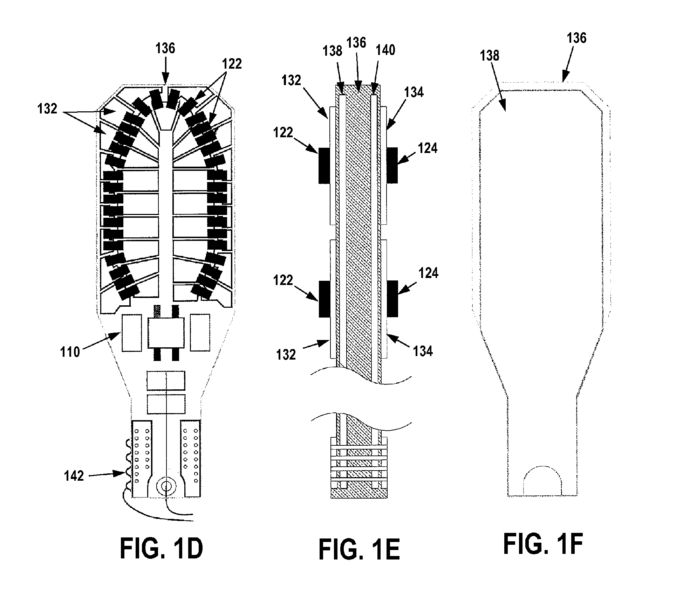

FIG. 1A is a conventional off-line switch mode power supply for an LED;

FIG. 1B illustrates how losses increase when a voltage difference between a source voltage and a LED voltage increases;

FIG. 1C is a block circuit for a LED direct AC drive under an exemplary embodiment;

FIG. 1D illustrates an elevational view of a LED circuit board under another exemplary embodiment;

FIG. 1E is a cross-section view of the circuit board of FIG. 1D;

FIG. IF illustrates the inner thermally-conductive layers of the circuit board of FIGs. 1E and 1D, along with an exemplary heat spreader configuration;

FIG. 2A is an exemplary chart illustrating LED voltage against average drive current;

FIG. 2B is an exemplary chart illustrating the effects of junction temperature on LED voltage;

FIG. 3A is an exemplary voltage and current waveform relative to LED conduction;

FIG. 3B is an exemplary current waveform for application to LED driver circuit;

FIG. 4 illustrates the relationship of resistance to combined LED voltage in the LED driver circuit;

FIG. 5 illustrates an effect of LED voltage on driver circuit regulation;

FIG. 6 illustrates how the number of LEDs connected to the driver circuit affects driver efficiency;

FIG. 7 illustrated how the number ofLEDs connected to the driver circuit affects power factor;

FIG. 8 illustrates a combination of efficiency, power factor and regulation versus combined LED voltage for a driver circuit under an exemplary embodiment;

FIG 9 illustrates a peak-to-average current ratio compared to LED voltage under an exemplary embodiment;

FIG. 10A illustrates the effect of LED combined voltage on peak current during operation of a driver circuit;

FIG. 10B illustrates another effect of LED combined voltage on peak current during operation of a driver circuit;

FIG. 11A provides an illustration of the effect of forward-phase dimming, implemented in a driver circuit;

FIG. 11B provides an illustration of the effect of reverse-phase dimming, implemented in a driver circuit;

FIG. 12 illustrates a forward phase dimmer application in conjunction with a driver circuit under another exemplary embodiment; and

FIG. 13 illustrates an average current phase angle transfer function for a dimmer coupled to the driver circuit in the exemplary embodiment.

## DETAILED DESCRIPTION

Various configurations exist for LED lamp circuits, one of which is described in PCT Application WO 2009/089529, titled "LED Lamp Replacement of Low Power Incandescent Lamp," filed January 12, 2009, and another described in US Patent Application Number 12/826, 774, titled "LED Lamp Replacement of Low Power Incandescent Lamp," filed June 30, 2010, both of which are assigned to the present applicant, and both of which are incorporated by reference in their entirety herein. In these configurations, a driver circuit powers a first plurality of LED's are connected in series on one side of a flat substrate, and a second plurality of LED's are connected on an opposite side. While this configuration will be referenced in the description below, it is understood by those skilled in the art that a multitude of other configurations are contemplated by this disclosure as well.

Turning to FIG. 1A, a block diagram of an off-line switch mode power supply for powering LED 103 is disclosed. A switch mode power supply is required to convert the 120VAC line voltage 100 to a low DC current (from less than 10 mA to more than 350 mA) 101. Power supplies of 5 Watts output power or less are conventionally fly-back type, and have a typical efficiency range of less than 80-90%, and typically 85%. They are also prone to failure if they encounter a surge, where a spike of high voltage could damage the MOSFET switch 102, especially if a surge suppressor, such as an MOV (metal oxide varistor), is not incorporated.

A common method of driving low voltage LEDs is by using an impedance in series with AC line to limit the current and drop the excess voltage across it. This impedance may be a resistor, a capacitor or an inductor. A resistor is the cheapest and most available, but the energy $E=(I^2)(R)(\Delta t)$ it dissipates is lost and cannot be recovered. The losses increase with the increase in the difference in voltage between the source voltage and the LED voltage, as illustrated in FIG. 1B.

Assuming $V_s$ = 166V, V=36V and I=20mA. Then

$$R = \frac{V_S - V}{I} = \frac{166 - 36}{0.02} = 6.5k\Omega$$

The power dissipation across the resistor is $P_R = I^2 \times R = 2.6W$. Accordingly, the efficiency of the system becomes

$$\frac{P_{OUT}}{P_{IN}} = \frac{I \times V}{(I \times V) + P_R} = \frac{0.02 \times 36}{(0.02 \times 36) + 2.6} = \frac{0.72}{3.32} = 22\%$$

Obviously this system is not feasible.

Another solution is to replace R in FIG. 1B by an impedance that does not dissipate energy, such as an inductor or a capacitor. A capacitor is more available in size and value than an inductor. The only limiting factor is the maximum allowable voltage drop across the capacitor. However, this solution renders the LED non-dimmable and increases the size of the circuit board due to the large size of the AC capacitor which needs to be rated to the line voltage plus a margin.

The resistor impedance solution would be feasible if the power dissipation is reduced, which is accomplished if the voltage difference ($V_s$-V) is reduced. This is done by increasing the number of LEDs in series until the total LED voltage drop approaches the source voltage $V_s$ which will reduce the voltage difference ($V_s$-V) as well as the value of R required to limit the current.

For example, assume several LEDs are connected in series to produce a total load voltage V=136V. The new value for R is

$$R = \frac{V_s - V}{I} = \frac{166 - 136}{0.02} = 1.5k\Omega$$

The new power dissipation is

$$P_R = I^2{}_{LOAD}R = 0.6W$$

The new system efficiency becomes

$$\frac{P_{OUT}}{P_{IN}} = \frac{I \times V}{(I \times V) + P_R} = \frac{0.02 \times 136}{(0.02 \times 116) + 0.6} = \frac{2.72}{3.32} = 82\%$$

Clearly, this is well within the acceptable range for power supply efficiency, which is accomplished by shifting more of the wasted power to useful power.

Turning to FIG. 1C, a block diagram of a linear LED direct AC drive 110 is illustrated under one embodiment of the invention. The LED package 107 is powered by an AC source 104 which is passed through rectifier 105 to produce a rectified AC voltage source v(t) 106. Of course, if a DC source is provided, rectifier 105 becomes unnecessary, and may be omitted. Resistive element R, which may include one or more resistors or other devices, is connected in series to the DC source, followed by a series combination of LEDs 107. In an alternate embodiment, the LEDs may be configured using a second series combination ofLEDs (not shown) that are in parallel to series 107. To increase reliability, a MOV (metal oxide varistor) surge suppressor or other similar suppressor may be included, preferably between the AC power source 104 and rectifier 105. A smoothing capacitor 108 may also be used to reduce current ripple and flicker.

Under a preferred embodiment, LED package 107 includes multiple low cost surface mount LEDs connected in series on a surface board thereby increasing the load voltage drop as well as the useful light output and the system efficiency. This may also be accomplished by assembling LED dies directly on the printed circuit board (Chip On Board) in the same series combination.

An LED emitter can be packaged by combining LED dies in series to produce a high combined LED voltage at the rated current. Such an LED series will draw the same current as a single LED, but will reflect a voltage that is very close to the rectified source voltage. Combining LEDs in series results in a high voltage DC LED, which will require a rectifier when operated from an AC source. The advantage is the ability to add a smoothing capacitor to reduce current ripple and attain a steady light source with no flicker. The assembly of surface-mount devices (SMD) is an automated and low cost process. It is therefore preferred that all components are SMD type. This is another reason a high voltage AC capacitor is not feasible since they are hard to find in SMD.

Turning to FIGs. 1D-F, an exemplary LED circuit board is shown for an incandescent-equivalent LED lamp application. For the purposes of illustration only, assuming a 75 lumen (1m) system, 36 LEDs 122 are arranged in series, 18 on either side of the circuit board, preferably in identical locations. As an example, the system shown in FIGs. 1D-F is driven according to the schematic in FIG. 1C, at an LED current of 10 mA. Accordingly, the lumen output per LED at that current is 2 lumens, yielding a total of 75 lumens at a total input power of 1.2 W, and a total system luminous efficacy of 60 Lm/W.

Under a high-output version of the above illustration, two parallel circuits of 36 LEDs are provided on each side of the PCB, as shown in FIG. 1E. In this instance, the LED current for each series circuit is increased to 30 mA. Even though the large number of LEDs in each circuit will ensure equal current sharing, series resistors may be added in each of the parallel LED paths to help dissipate the increase in losses due to the higher output, as well as improve current sharing. As mentioned previously, surface mount MOV surge suppressor as well as a fuse can also be added to increase reliability.

Regarding heat dissipation, multiple low power LEDs 122 and 124 dissipate their heat through heat spreader copper islands 132 and 134 on top and bottom layers of a multi-layered PCB board or substrate 136. The islands 132 and 134 preferably transfer the heat to inner layers of copper heat spreaders 138 and 140. Each is located in close proximity to heat islands 132 and 134 on the outer layers. Inner spreaders 138 and 140 conduct heat internally to a screw base 142 of the lamp, which in turn will dissipate it away through the fixture and electrical wiring (not illustrated). Since the screw base 142 is connected to AC line, it needs to be fully isolated from the rest of the circuit 110. The core thickness of the substrate 136 between the outer islands 132 and 134 and the inner heat spreaders 138 and 140 should have the minimum thickness that the safety standards will allow to reduce thermal resistance to a minimum and maximize heat transfer.

Since heat is dissipated through conduction to the screw base, the lamp can be placed inside a sealed globe with no air circulation. It will also allow for more light to radiate, since the LEDs are elevated and more visible. At the bottom of the LED substrate 136, heat spreaders 138 and 140 are preferably thermally bonded together by printed circuit board vias, which are means to provide electrical connection between traces on different layers of a circuit board, in order to maximize power dissipation to the screw base by thermally conducting heat from one layer to another.

LEDs 122 and 124 may be positioned on substrate 136 in an arrangement of an arc that resembles the filament of an incandescent light bulb, with the intention of maintaining a classic look. The power conversion part of the system is preferably installed on a circuit board portion of the substrate 136 in order to minimize cost and simplify assembly. The components should be surface-mount devices to allow for automation.

Referring back to FIG. 1C, a number of issues need to be considered when selecting components and design parameters for a driver circuit, including the number of LEDs and series resistance as a function of input voltage and LED current the desired regulation, power factor, current peak-to-average ratio and efficiency. When dimming circuits are used, these same considerations come into play as well.

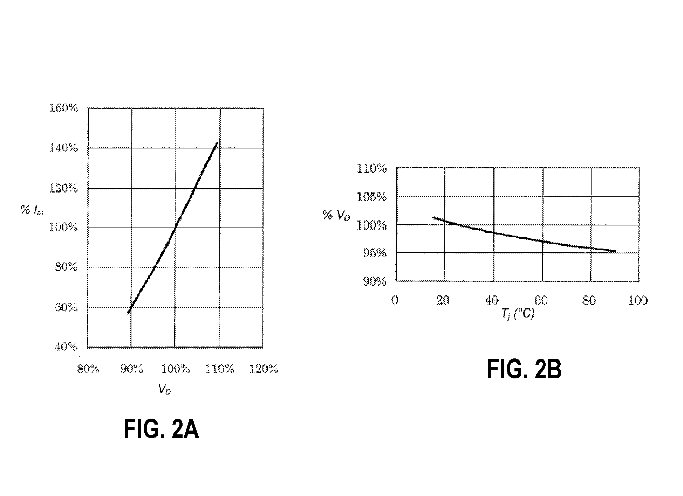

As mentioned previously, a LED load is a current driven device, where the voltage varies slightly with temperature and drive current as shown in FIG. 2A and 2B. FIG. 2A illustrates the LED voltage versus drive current, where it can be seen that the current increases at a higher rate compared to LED voltage. FIG. 2B illustrates the LED voltage versus junction temperature, where it can also be seen that the LED voltage drops slightly as the junction temperature is increased.

For operation, driver 110 produces an input voltage that is sinusoidal and is represented by

$$v(t) = V \sin(\frac{2\pi}{T} t) \qquad (1)$$

The LEDs 107 will begin to conduct when the applied voltage (V) exceeds the combined LED voltage $V_D$. Thus, the time ($t_1$) when the LEDs begin to conduct is

$$t_1 = \frac{T}{2\pi} \sin^{-1} \left( \frac{V_D}{V} \right) \qquad (2)$$

The LEDs stop conducting at a time ($t_2$) when the applied voltage (V) drops below the combined LED voltage $V_D$ and is represented by

$$t_2 = \frac{T}{2} - \frac{T}{2\pi} \sin^{-1} \left( \frac{V_D}{V} \right) \qquad (3)$$

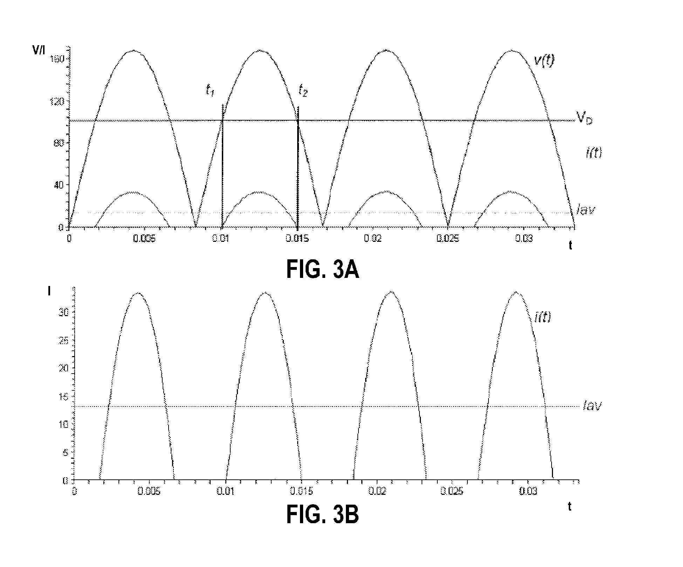

A graphical depiction of LED condution at times $t_1$ and $t_2$ is provided in FIG. 3A, together with the respective voltage and current waveforms.

The magnitude of the current i(t) applied to the LEDs is also shown in FIG. 3A and is determined by the difference between the applied voltage (V) and the combined LED voltage $V_D$ divided by series resistance R:

$$i(t) = \frac{V \sin(\frac{2\pi}{T} t) - V_D}{R} \qquad (4)$$

FIG. 3B provides an illustration of a current waveform and average current for driver 110. In this example, the average current is defined as:

$$Iav = \frac{4}{T} \int_{t_1}^{\frac{T}{4}} i(t) dt \qquad (5)$$

Which is further evaluated to be:

$$Iav = \frac{V}{\pi R}\left(2\sqrt{1-\left(\frac{V_D}{V}\right)^2} + \left(\frac{V_D}{V}\right)\left(2\sin^{-1}\left(\frac{V_D}{V}\right) - \pi\right)\right) \qquad (6)$$

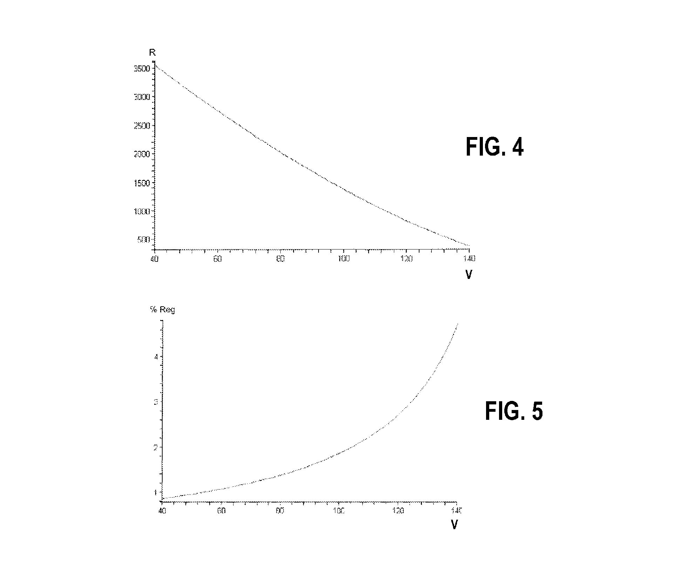

When input voltage to driver circuit 110 is $120V_{RMs}$, (where $V = V_{peak} = 170V$), and holding an average current $I_{av}$ at 20mA, the resistance related to the combined LED voltage $V_D$ is illustrated in FIG. 4. As can be seen from the figure, an increase in the number of LEDs used in 107 increases the combined LED voltage $V_D$, which in turn reduces the resistance.

Thus power regulation becomes a factor when taking into consideration the rate of change of the current with respect to the input voltage. When the change of current and input voltage is factored in, regulation of driver circuit 110 may be defined as

$$\mathrm{Re}\,g = \frac{d(Iav)}{dV} \approx \frac{2\sqrt{V^2 - V_D^2}}{\pi V R} \qquad (7)$$

Referring to the above, and particularly to eq. (4), it can be seen that resistance R plays a role in setting the average current for a given input voltage and a given number of series connected LEDs. If the number of LEDs change, the combined LED voltage $V_D$ changes as well, and the average current will change correspondingly according to eq. (4). Thus, to maintain the average current, the resistance needs to be changed accordingly. If $V_D$ increases, the resistance will need to be reduced in order to keep the average current at the same level, but, as can be seen from eqs. (8) and (9) below, the effect on regulation will be greater.

Starting with the average current,

$$Iav = \frac{2\sqrt{V^2 - V_D^2}}{R\pi} + \frac{V_D\left(\sin^{-1}\left(\frac{V_D}{V}\right) - \pi\right)}{R\pi} \qquad (8)$$

The relationship between R and $V_D$ can be established by setting $\dfrac{d(I_{av})}{dR} + \dfrac{d(I_{av})}{dV_D} = 0$, which assures that the net effect, as a result of varying R and $V_D$ is zero. It follows that:

$$\frac{-1}{\pi R^2}\left[2\sqrt{V^2 - V_D^2} + 2V_D\sin^{-1}\left(\frac{V_D}{V}\right) - V_D\pi\right] + \frac{1}{\pi R}\left(2\sin^{-1}\left(\frac{Vd}{V}\right) - \pi\right) = 0$$

Solving for R, it can be determined that

$$R = \frac{2\sqrt{V^2 - V_D^2} + 2V_D\sin^{-1}\left(\frac{V_D}{V}\right) - \pi V_D}{2\sin^{-1}\left(\frac{V_D}{V}\right) + \pi} \qquad (9)$$

Now, substituting R in eq. (7), the optimum regulation for driver circuit 110 can be established in terms of the number of LEDs used (and combined voltage $V_D$), with the resistance taken into consideration as an implicit variable:

$$\operatorname{Reg} = \frac{2\sqrt{V^2 - V_D^2}\left(2\sin^{-1}\left(\frac{V_D}{V}\right) + \pi\right)}{V\pi\left(2\sqrt{V^2 - V_D^2} + 2V_D\sin^{-1}\left(\frac{V_D}{V}\right) - V_D\pi\right)} \quad (10)$$

The resulting effect of combined LED voltage on regulation is illustrated in FIG. 5. As can be seen from the graph, an increase in the LED voltage affects power regulation in a non-linear manner.

To optimize efficiency in driver circuit 110, the efficiency should be defined according to the ratio of LED power ($P_D$) to total input power (PIN). The LED power is defined according to the following:

$$P_D = \frac{4}{T}\int_{t_1}^{\frac{T}{4}} i(t)V_D\, dt = \frac{2V_D\sqrt{V^2 - V_D^2} + V_D^2\left(2\sin^{-1}\left(\frac{V_D}{V}\right) - \pi\right)}{\pi R} \quad (11)$$

while the total input power ($P_{IN}$) is defined according to

$$P_{IN} = \frac{4}{T}\int_{t_1}^{\frac{T}{4}} i(t)v(t)\, dt = -\frac{2V_D\sqrt{V^2 - V_D^2} + V^2\left(2\sin^{-1}\left(\frac{V_D}{V}\right) - \pi\right)}{2\pi R} \quad (12)$$

Where interval $t_1$ is determined from eq. (2), above. Using this value, we can determine efficiency (*eff*) according to

$$eff = \frac{P_D}{P_{IN}} = -2\frac{2V_D\sqrt{V^2 - V_D^2} + V_D^2\left(2\sin^{-1}\left(\frac{V_D}{V}\right) - \pi\right)}{2V_D\sqrt{V^2 - V_D^2} + V^2\left(2\sin^{-1}\left(\frac{V_D}{V}\right) - \pi\right)} \quad (13)$$

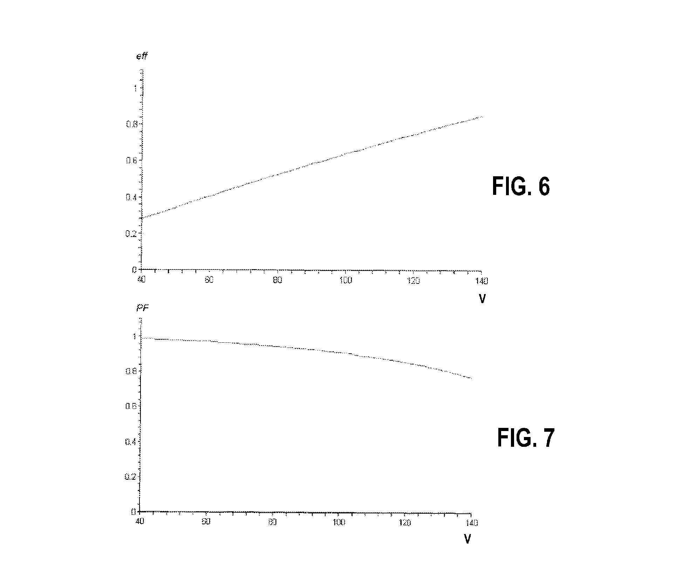

The graphical depiction of driver efficiency versus LED voltage is shown in FIG. 6. As can be seen from the graph, the efficiency of the circuit improves as the number of LEDs increases.

The power factor of driver circuit 110 is defined as a ratio of total input power to the voltage $V_{RMS}$ and current $I_{RMS}$ product, where

$$I_{RMS} = \sqrt{\frac{4}{T}\int_{t_1}^{\frac{T}{4}} i^2(t)\, dt} = \frac{1}{R}\sqrt{\frac{-6V_D\sqrt{V^2 - V_D^2} - 2\sin^{-1}\left(\frac{V_D}{V}\right)\left(V^2 + 2V_D^2\right) + \pi\left(2V_D^2 + V^2\right)}{2\pi}} \quad (14)$$

and

$$V_{RMS} = \sqrt{\frac{4}{T} \int_{t_1}^{\frac{T}{4}} v^2(t)\, dt} = \frac{V}{\sqrt{2}} \qquad (15)$$

where the power factor (PF) is determined from

$$PF = \frac{P_{IN}}{I_{RMS}\, V_{RMS}} = \frac{-2V_D\sqrt{V^2 - V_D^2} - 2V^2 \sin^{-1}\left(\frac{V_D}{V}\right) + \pi V^2}{V\sqrt{\pi} \sqrt{-6V_D\sqrt{V^2 - V_D^2} - 2\sin^{-1}\left(\frac{V_D}{V}\right)\left(V^2 + 2V_D^2\right) + 2\pi V_D^2 + \pi V^2}} \qquad (16)$$

The effect of combined LED voltage on the input power factor is illustrated in FIG. 7. As can be seen, the input power factor drops as the number of LEDs increases.

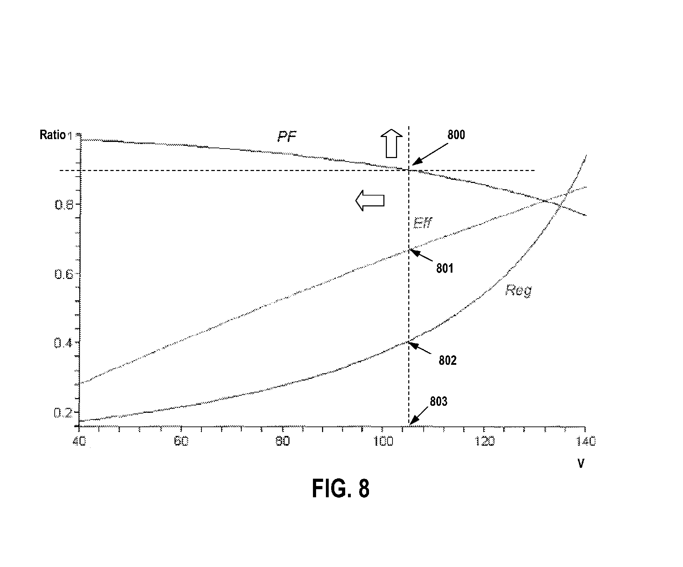

Turning to FIG. 8, the relationship of efficiency, power factor and regulation versus the combined LED voltage is illustrated. When configuring a specific driver circuit for operation, the designer and/or manufacturer would define an acceptable region of operation, while taking into consideration the other parameter. For example, if a high power factor was critical for operation of a driver circuit, the designer or manufacturer would select a region were the power factor is greater than 0.9 (see 800 in FIG. 8), followed by the highest point of efficiency 801 for that region. That point will correspond to a combined LED voltage, which in turn will determine the number of LEDs to be used in the circuit. The regulation $R_{eg}$ can also be determined from this analysis as well via 802. As can be seen from the figure, both regulation and power factor can be improved in the driver circuit; however, these improvements would come at the expense of reduced efficiency.

Another circuit characteristic to consider is peak current. As the LED voltage varies, the peak LED current will increase relative to the average current. It is important during the design/manufacturing process to keep the peak current well below the manufacture's ratings. As an example, if an LED has an average current of 20mA, and a peak current of 30mA if the LED voltage is low, the peak current may reach as high as 50mA if the LED voltage is high.

Using eq. (4) above, the peak current ($I_{peak}$) can be determined from

$$I_{peak} = \left(\frac{V - V_D}{R}\right) \qquad (16)$$

The ratio of the peak current $I_{peak}$ to the average current $I_{av}$ (also referred in the art as "peak-to-average ratio") is useful in determining the optimum number of LEDs:

$$\frac{I_{peak}}{I_{av}} = \frac{2\sqrt{V^2 - V_D^2} + 2V_D \sin^{-1}\left(\frac{V_D}{V}\right) - \pi V_D}{\pi(V - V_D)} \qquad (17)$$

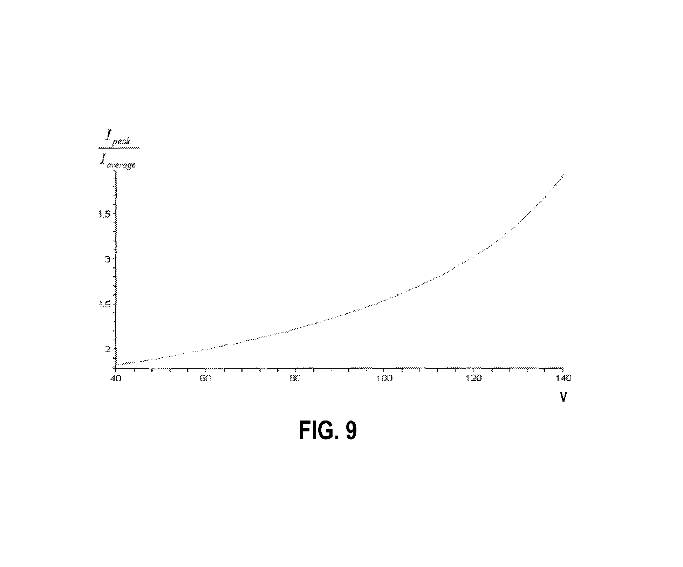

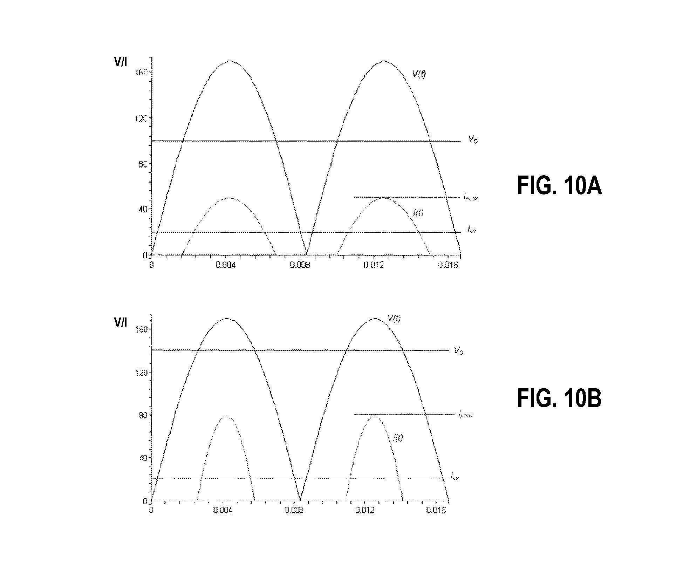

As can be seen in FIG. 9, the peak-to-average ratio increases rapidly as the LED combined voltage $V_D$ increases, and having a corresponding reduction in R in order to maintain the current at a constant level. FIGs. 10A and 10B show alternate ways of viewing the effect of $V_D$ on peak current. In FIG. 10A the average current is 20mA, with the combined LED voltage $V_D$ being 100V. As such, the peak current $I_{peak}$ is 50mA, with a peak-to-average ratio of 2.5. Turning to FIG. 10B, using the same average curent of 20mA, the combined LED voltage $V_D$ is now 140V, thus increasing the peak current $I_{peak}$ to 79mA, with a peak-to-average ratio of 4.

The disclosures provided above are also applicable to driver circuits that include dimmer circuits. A common dimmer type is a forward-phase dimmer, such as a TRIAC dimmer, which operates as a low cost dimmer. TRIACs were originally designed for use with incandescent lamps, but were unsuited for rectified capacitive loads for a number of reasons. A bulk capacitor (C) , which is typically used at the input of any AC-to-DC circuit will draw current that is proportional to the rate of change of the applied voltage, or

$$i(t) = C\frac{dv(t)}{dt} \qquad (18)$$

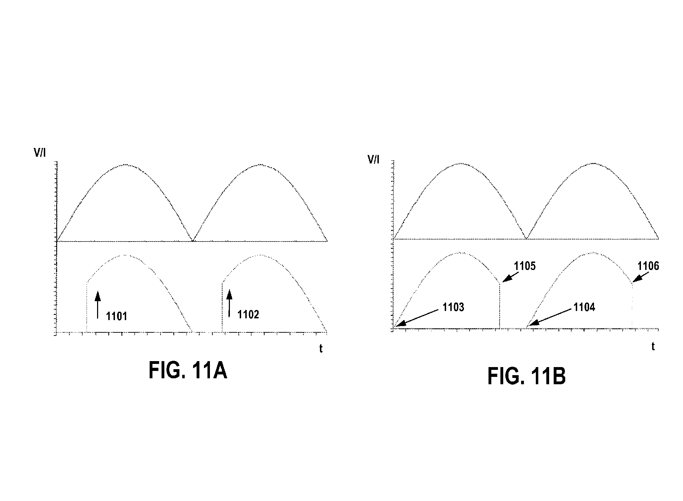

FIG. 11A illustrates that voltage changes rapidly from zero to a finite value in a very short time (1101, 1102), which in turn causes current to rapidly increase to a very large value (inrush current). Designers/manufacturers go through a great deal of trouble to minimize this effect.

Another reason why TRIACs are avoided for dimming applications is the effect of TRIAC holding current. When a TRIAC is triggered at the gate terminal, it will conduct as long as current keeps flowing through the gate. If current stops flowing through the trigger gate, the TRIAC will continue to conduct as long as the load current through its terminals is greater than a minimum value (i.e., the holding current). Typically, this minimum current may be as low as 50mA and higher than 200ma.

The TRIAC gate is triggered by a pulse to reduce the losses at the gate terminal, and to allow the TRIAC to switch off at the end of each half cycle, so it can be triggered again at the required phase angle of the next half cycle. When the capacitor is fully charged after the voltage peak, the rectifier diodes will become reversed biased, the input current will drop to zero, and the TRIAC will turn off. This behavior will continue to take place, causing random turning-offs and excessive inrush current at turn-on. The effect on the circuit will be erratic behavior of the power supply and, in some cases, failure.

The application is not as severe with reverse phase dimmers (see FIG. 11B), since the dimmer is conducting at the beginning of the cycle (1103, 1104), which limits the input current to a finite value. In contrast to forward phase dimmers, control in a reverse phase dimmer takes place before the end of end half cycle (1105, 1106). Also, reverse phase dimmers have no minimum current requirement to keep the switches on. Accordingly, switch types such as IGBTs, MOSFETs, BJT, and so forth, can be used.

As discussed above, LED drivers are preferably current sources, where the output current is regulated against line and load changes. However, if a dimming circuit is applied to a driver that is not designed for it, the power supply will attempt to regulate the output current, thereby defeating the purpose of the dimmer function, not to mention that the dimmer will likely cause inrush current as described above.

Whether the dimmer is a reverse phase or forward phase type, the LED system described in this disclosure will dim smoothly without flickering or exhibiting transient behavior. This is due to the fact that the LEDs will respond to any current flowing through the device, as long as the LED current is higher than the TRIAC holding current. Since the LED driver described in this invention does not regulate the current, the light output will readily respond to changes in input voltage produced by the AC line dimmer.

It is noted that the driver configuration disclosed herein is similar regardless whether a dimmer is used or not. However, one exception exists in that a dimmer requires consideration of a trigger phase angle $\alpha T$ which affects current flow through the LEDs. A more detailed explanation of the phase angle effect using a TRIAC dimmer is provided below.

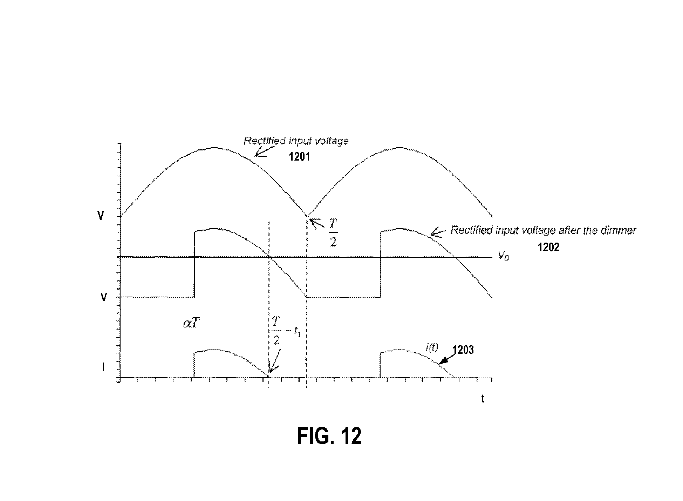

The average current for driver circuit 110, without a dimmer, was discussed above in connection with FIG. 3B and eq. (6). In contrast, FIG. 12 provides an example of a forward phased dimmer application on a driver circuit, where an exemplary relationship of the input voltage 1201, dimmer voltage 1202 and current 1203 is shown. Here, the effect of trigger phase angle $\alpha T$ for the dimmer voltage 1202 is illustrated, where the average current is determined to be

$$I_{av} = \frac{2}{T}\int_{\alpha T}^{\frac{T}{2}-t_1} i(t)\,dt \approx \frac{V}{\pi R}\left(2\cos^2(\pi\alpha)-1+2\frac{V_D}{V}\alpha\pi+\sqrt{1-\left(\frac{V_D}{V}\right)^2}+\frac{V_D}{V}\left(\sin^{-1}\left(\frac{V_D}{V}\right)-\pi\right)\right) \quad (19)$$

Compared to the average current of a driver circuit without dimming (FIG. 3B, eq. (6)), the current duty cycle is reduced as the dimmer phase angle $\alpha T$ is advanced. As a result, the peak-to-average current ratio will be higher

The range of the dimming function in FIG. 12 is from

$$t_1 = \frac{T}{2\pi} \sin^{-1}\left(\frac{V_D}{V}\right) \text{ to } t_2 = \frac{T}{2} - \frac{T}{2\pi} \sin^{-1}\left(\frac{V_D}{V}\right) \quad (20)$$

Accordingly, as an exmaple, the LED average current would be 20mA at $120V_{Rms}$ input voltage, 1.4kΩ resistance and $100V_{DC}$ combined LED voltage.

The average current phase angle transfer function would be

$$I_{av} = f(\alpha) = A\cos^2(\pi\alpha) + B\alpha - C, \quad (A,B,C) \in R \quad (21)$$

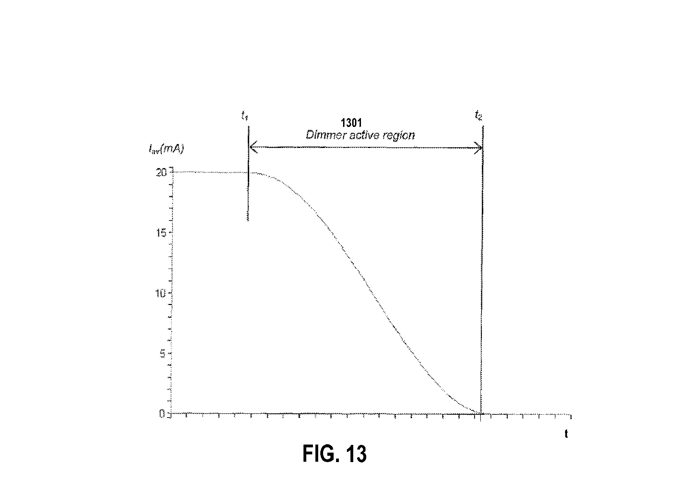

Generally speaking, equation 21 is a sinusoidal function with a linear component, which can be seen more clearly in the active region 1301 of FIG. 13, where the averge current is shown as a function of the dimmer phase angle. The active region is the time between $t_1$ and $t_2$ when the input voltage v(t) is greater than the combined LED voltage VD and the LEDs are conducting. To increase the time length of the active region, the LED combined voltage needs to be reduced, while taking into consideration the power factor, regulation and efficiency of the driver circuit, discussed above.

Dimmers have a tendency of reducing the LED current duty cycle. Under a preferred embodiment, a capacitor (108) is not used in the drive circuit, which may introduce an increased "strobe effect" in the LEDs. However, this effect should not be detected by most people, especially if the application is to illuminate static objects. Alternately, a capacitor arrangement may be added to the circuit in order to reduce the strobe effect, without affecting performance.

Although various embodiments of the present invention have been described with reference to a particular arrangement of parts, features and the like, these are not intended to exhaust all possible arrangements or features, and indeed many other embodiments, modifications and variations will be ascertainable to those of skill in the art.

**Claims**

1. A method for optimally configuring a driver circuit for a light emitting diode (LED) lamp comprising a plurality of LEDs connected in series, the method comprising the steps of:

    providing a direct (DC) constant-current source in the driver circuit that is configured to be outputted to a predetermined number of the plurality of LEDs, the DC input comprising an average current and a predetermined voltage, wherein the predetermined voltage is dependent on the predetermined number of LEDs, and wherein the predetermined number of LEDs is selected from a criterion based on at least one of:

    (1) a power factor and an efficiency of the driver circuit,
    (2) a power factor, an efficiency and a regulation of the driver circuit, and
    (3) an efficiency and a regulation of the driver circuit.

2. The method according to claim 1, further comprising the step of providing a dimmer between the constant-current source and the plurality of LEDs, wherein the dimmer is configured to operate in an active region defined by a combined voltage of the predetermined number of the plurality of LEDs.

3. The method according to claim 2, wherein the dimmer comprises a TRIAC.

4. An LED power system, comprising:

    a driver circuit comprising a linear direct (DC) constant-current source providing an average current output at a predetermined voltage; and
    a light emitting diode (LED) lamp coupled to the driver circuit, said lamp comprising a predetermined number of LEDs connected in series;

    wherein the predetermined voltage is dependent on the predetermined number of LEDs, and wherein the predetermined number of LEDs is selected from a criterion based on at least one of:

(1) a power factor and an efficiency of the driver circuit,
(2) a power factor, an efficiency and a regulation of the driver circuit, and
(3) an efficiency and a regulation of the driver circuit.

5. The method of any one of claims 1-3, or the LED power system of claim 4, wherein the power factor is determined from a ratio of total input power ($P_{IN}$), over a product of a current magnitude ($I_{RMS}$) and a voltage magnitude ($V_{RMS}$) for the driver circuit.

6. The method of any one of claims 1-3, or the LED power system of claim 4, wherein the efficiency is determined from a LED power ($P_D$) compared to a total input power ($P_{IN}$) for the driver circuit.

7. The method of any one of claims 1-3, or the LED power system of claim 4, wherein the regulation is determined from a differentiation in the average current ($d(I_{av})$) compared to a differentiation in an input voltage ($dV$) for the driver circuit.

8. The method of any one of claims 1-3, or the LED power system of claim 4, wherein the criterion for the predetermined number of LEDs further comprises a peak-to-average ratio of the driver circuit.

9. The LED power system of claim 4, further comprising a dimmer between the constant-current source and the predetermined number of LEDs, wherein the dimmer is configured to operate in an active region defined by a combined voltage of the predetermined number of the plurality of LEDs.

10. The LED power system of claim 4 or claim 9, wherein the dimmer comprises a TRIAC.

100    101              102

AC                                                                    103

**FIG. 1A
(Prior Art)**

Vs    R    V    **FIG. 1B
(Prior Art)**
        I

110
104    105    v(t)    106    107
Vrms                    R
        Iav    108    V_D

**FIG. 1C**

**FIG. 1D**

**FIG. 1E**

**FIG. 1F**

FIG. 2A

FIG. 2B

**FIG. 3A**

**FIG. 3B**

FIG. 4

FIG. 5

FIG. 6

FIG. 7

FIG. 8

FIG. 9

FIG. 10A

FIG. 10B

**FIG. 11A**

**FIG. 11B**

FIG. 12

FIG. 13

Europäisches
Patentamt

European
Patent Office

Office européen
des brevets

# EUROPEAN SEARCH REPORT

Application Number

EP 11 15 4206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 322 139 A1 (TOYODA GOSEI KK [JP]) 25 June 2003 (2003-06-25) | 1,4-8 | INV. H05B33/08 |
| Y | * paragraph [0008] - paragraph [0013] * * paragraph [0035]; claims 1-4; figures 2,3 * | 2,3,9,10 | |
| X | WO 2009/089529 A1 (GOEKEN GROUP CORP [US]; JANIK RAYMOND G [US]; SCIANNA CARLO [US]) 16 July 2009 (2009-07-16) * the whole document * | 1-10 | |
| Y | US 2007/182347 A1 (SHTEYNBERG ANATOLY [US] ET AL) 9 August 2007 (2007-08-09) * paragraph [0006] - paragraph [0022] * * claims 13-22; figures 7-9 * | 2,3,9,10 | |
| A | US 6 400 101 B1 (BIEBL ALOIS [DE] ET AL) 4 June 2002 (2002-06-04) * paragraph [0002] - paragraph [0011] * | 1,4 | |
| A | US 2008/018261 A1 (KASTNER MARK A [US]) 24 January 2008 (2008-01-24) * the whole document * | 1,4 | TECHNICAL FIELDS SEARCHED (IPC) H05B |

The present search report has been drawn up for all claims

| Place of search | Date of completion of the search | Examiner |
|---|---|---|
| Munich | 9 June 2011 | Henderson, Richard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 15 4206

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2011

| Patent document cited in search report | | Publication date | Patent family member(s) | | Publication date |
|---|---|---|---|---|---|
| EP 1322139 | A1 | 25-06-2003 | US | 2003117088 A1 | 26-06-2003 |
| WO 2009089529 | A1 | 16-07-2009 | AU | 2009203998 A1 | 16-07-2009 |
| | | | CA | 2710542 A1 | 16-07-2009 |
| | | | CN | 101940061 A | 05-01-2011 |
| | | | EP | 2227925 A1 | 15-09-2010 |
| | | | JP | 2011510490 T | 31-03-2011 |
| | | | KR | 20100102643 A | 24-09-2010 |
| | | | US | 2010277069 A1 | 04-11-2010 |
| US 2007182347 | A1 | 09-08-2007 | NONE | | |
| US 6400101 | B1 | 04-06-2002 | AT | 331422 T | 15-07-2006 |
| | | | CA | 2341657 A1 | 11-01-2001 |
| | | | WO | 0103474 A1 | 11-01-2001 |
| | | | DE | 19930174 A1 | 04-01-2001 |
| | | | EP | 1118251 A1 | 25-07-2001 |
| | | | JP | 2003504797 T | 04-02-2003 |
| US 2008018261 | A1 | 24-01-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61303344 B
- WO 2009089529 A
- US 12826774 B